# EUROPEAN PATENT APPLICATION

(11) **EP 4 736 811 A1**
(43) Date of publication of application: **06.05.2026**
(21) Application number: 24210085.7
(22) Date of filing: 31.10.2024
(51) Int. Cl.: A61C 17/26, A61C 17/32, A61C 17/20

(54) **MECHANICAL MOUNTING OF A DRIVE TRAIN OF AN ORAL CLEANING DEVICE**

(71) Applicant: Koninklijke Philips N.V., 5656 AG Eindhoven (NL)
(72) Inventor: SOLERIO, Daniele, Eindhoven (NL); BRUGGERS, Jan Willem, Eindhoven (NL); RAJENDRAN, Vijayaragavan, Eindhoven (NL)
(74) Representative: Philips Intellectual Property & Standards

(57) **Abstract**

Disclosed herein is a drive train mount (114) for an oral cleaning device (100). The drive train mount comprises a mounting component (116) comprising a first fastening interface (210) configured for receiving the drive train of the oral cleaning device and comprising at least one first gripping element (204). The drive train mount further comprises a clamping component (118) comprising at least one second gripping element (206) paired with the at least one first gripping element and a second fastening interface (211). The clamping component and the mounting component are configured to form a wedged mechanical interlock (500). Actuation of the wedged interlock causes the paired at least one first gripping element and the at least one second gripping element to form at least one parallel jaw clamp (300) configured to grip at least one interior structural element (106) of the oral cleaning device.

## Description

### TECHNICAL FIELD

The invention relates to oral cleaning devices, in particular to mechanical mounting of a drive train of an oral cleaning device.

### BACKGROUND OF THE INVENTION

Oral cleaning devices, such as electric toothbrushes or sonic toothbrushes, are designed to improve dental hygiene by utilizing motor-driven brushing techniques that enhance plaque removal and gum cleaning. These devices often incorporate features like oscillating or sonic movements and timers to ensure thorough and consistent cleaning.

United States patent publication US 10,813,733 B2 discloses a drivetrain assembly for a personal care device, the drivetrain assembly including a primary resonator; a secondary resonator configured to reduce vibrations transmitted from the motor to a body of the personal care device; a fixed point positioned between the primary resonator and the secondary resonator; a first spring member connected at a first end to the primary resonator and at a second end to the fixed point; a second spring member connected at a first end to the secondary resonator and at a second end to the fixed point; a coupling spring connected at a first end to the primary resonator and at a second end to the secondary resonator; and an actuator configured to exert force on at least one of the primary resonator and the secondary resonator.

### SUMMARY OF THE INVENTION

The invention provides for a drive train mount for an oral cleaning device, an oral cleaning device, and a method of replacing a battery of an oral cleaning device in the independent claims. Embodiments are given in the dependent claims.

In one aspect a drive train mount for an oral cleaning device is disclosed. The drive train mount comprises a mounting component comprising a first fastening interface configured for receiving the drive train of the oral cleaning device. The mounting component further comprises at least one first gripping element. The drive train mount comprises a clamping component that comprises at least one second gripping element paired with the at least one first gripping element. The clamping component further comprises a second fastening interface configured for receiving the drive train. The clamping component and the mounting component are configured to form a wedged mechanical interlock. The drive train mount is configured such that the actuation of the wedged interlock causes the paired at least one first gripping element and the at least one second gripping element to form at least one parallel jaw clamp configured to grip at least one interior structural element of the oral cleaning device.

In another aspect, an oral cleaning device is disclosed. The oral cleaning device comprises the drive train mount. The oral cleaning device further comprises a body portion. The body portion comprises the at least one interior structural element. The oral cleaning device further comprises the drive train. The drive train mount rigidly mounts to the drive train to the body portion.

In another aspect, a method of replacing a battery of an oral cleaning device is disclosed. The oral cleaning device comprises an electronic portion with a battery. The oral cleaning device preferably comprises a front coupler (or top coupler or sealing element) configured for attaching a front portion of the drive train to the plastic tube. The front coupler is configured for sealing a front end of the plastic tube.

The method comprises removing a bottom cap from the body portion. The method further comprises at least partially removing an electronics portion from the body portion. The method further comprises at least partially removing the compression spring from the body portion. The method further comprises releasing the parallel jaw clamp for each of the two parallel rails by moving the clamping component away from the mounting component. The method further comprises at least partially removing the drive train mount from the body portion. The method further comprises at least partially removing the drive train from the body portion. The method further comprises preferably removing the front coupler from the body portion. The method further comprises replacing the battery. The method further comprises preferably inserting the front coupler into the body portion. The method further comprises inserting the drive train into the body portion. The method further comprises inserting the drive train mount into the body portion. The method further comprises inserting the compression spring into the body portion. The method further comprises inserting the electronic portion into the body portion. The method further comprises reattaching the bottom cap from the body portion and compressing the compression spring. The compression of the compression spring causes motion of the clamping component towards the mounting component to actuate the parallel jaw clamp for each of the two parallel rails causing it to grip the two parallel rails.

### BRIEF DESCRIPTION OF THE DRAWINGS

In the following preferred embodiments of the invention will be described, by way of example only, and with reference to the drawings in which:
Fig. 1 shows an exploded view of an oral cleaning device.
Fig. 2 shows an exploded side view of the drive train mount.
Fig. 3 shows an assembly drawing of the drive train mount.
Fig. 4 shows a cross-sectional view of an assembled oral cleaning device.
Fig. 5 shows a further assembly drawing of the drive train mount.
Fig. 6 shows a rear view of the assembled drive train mount.
Fig. 7 shows a horizontal cross-sectional view of the drive train mount.
Fig. 8 shows a vertical cross-sectional view of the drive train mount.
Fig. 9 illustrates a method of replacing a battery of an oral cleaning device.
Fig. 10 shows an additional cross-sectional view of an assembled oral cleaning device.

### DETAILED DESCRIPTION OF THE EMBODIMENTS

Like numbered elements in these figures are either equivalent elements or perform the same function. Elements which have been discussed previously will not necessarily be discussed in later figures if the function is equivalent.

In one aspect, there is a drive train mount for an oral cleaning device. A drive train as used herein encompasses a motor or actuator which is used to provide a mechanical motion or drive for the oral cleaning device. A drive train mount as used herein encompasses a mechanical part for mounting the drive train. The drive train mount comprises a mounting component comprising a first fastening interface configured for the drive train of the oral cleaning device and comprising at least one first gripping element. The first fastening interface may for example hook onto or connect with the portion of the drive train. In some examples, the first fastening interface may form a rigid connection between the mounting component and the drive train.

The drive train mount further comprises a clamping component comprising at least one second gripping element paired with the at least first gripping element. The clamping component further comprises a second fastening interface configured for receiving the drive train. For each first gripping element there is a complimentary second gripping element. The clamping component and the mounting component are configured to form a wedged mechanical interlock. The drive train mount is configured such that the actuation of this wedged interlock causes the paired at least one first gripping element and the at least one second gripping element to form at least one parallel jaw clamp. Each paired first gripping element and second gripping element forms a parallel jaw clamp. The at least one parallel jaw clamp is configured to grip at least one interior structural element of the oral cleaning device.

By pressing the mounting component and the clamping component together the wedged mechanical interlock or wedged mechanism causes the paired first gripping element and second gripping element to attract closer to each other. This forms the parallel jaw clamp which can be used to grab the structural internal element of the oral cleaning device. This means that by exerting a pressure between these two components this pressure can be converted into force which is used to grab the interior structural element of the oral cleaning device.

This may have a variety of benefits for an oral cleaning device. Typically, oral cleaning devices have a reciprocating or rotating motion which is used for performing such oral cleaning tasks as cleaning teeth as is in a powered or ultrasonic toothbrush. Over an extended period of time, for example over several thousand hours of use, there may be stresses on the internal structural elements of the oral cleaning device. By using the drive train mount as disclosed herein, the connection between the drive train mount and the at least one interior structural element can be maintained at a constant level even when the at least one interior structural element and/or the drive train mount itself is experiencing wear of fatigue.

Another benefit of this may be that because there is this wedged mechanical interlock or mechanism, by pulling the pieces apart this means that the at least one parallel jaw clamp can be released. This may for example facilitate the removal of components from the oral cleaning device to enable maintenance or even the replacement of a battery.

An alternative to using the drive train mount would for example be to use a drive train mount that relies on very tight mechanical tolerances between the drive train mount and the at least one interior structural element of the oral cleaning device. As was mentioned above, this could result in fatigue of the material over a period of thousands of hours of use. This may cause problems when desired to disassemble the oral cleaning device. The drive train mount does not have this problem as by actuation of the wedged mechanical interlock, the at least one parallel jaw clamp can be released. Also, when this oral cleaning device is then reassembled it is not reliant on maintaining the tight mechanical tolerances. A constant pressure for example provided by a spring on the mounting component and/or the clamping component may be used to maintain a constant grip by the at least one parallel jaw clamp on the at least one interior structural element of the oral cleaning device.

The at least one interior structural element could for example be rails or nibs or other extension into the interior.

In another example, the drive train mount is configured to rigidly mount the portion of the drive train to the oral cleaning device using the first fastening interface, the second fastening interface, and the at least one parallel jaw clamp. The use of the at least one parallel jaw clamp to mount to the oral cleaning device may be beneficial because it may provide for a consistently rigidly or controlled amount of gripping over the lifetime of the oral cleaning device. It may also provide for a means of removing the drive train mount and the drive train from the oral cleaning device and then reinstalling it after service.

In another example, the wedged interlock is formed from a pair of mating conical wedges. The pair is distributed between the mounting component and the clamping component. The use of the conical wedges may be beneficial because this provides for an automatic alignment of the mounting component and the clamping component together.

In another example, the drive train mount is further configured to form a snap fit between the mounting component and the clamping component. The use of the snap fit may be beneficial because this may prevent the mounting component and the clamping component from becoming disassembled. This may make it easier not only to assemble the oral cleaning device but also during disassembly and repair.

In another example, the snap fit is configured to enable opening of the parallel jaw clamp by retracting the clamping component from the wedged interlock. For example there may be a snap fit but it may not be tight, in that it may allow some play between the wedged mechanical interlock. This may for example prevent the drive train mount from falling apart but also enable its easy disassembly.

In another example, the snap fit is further configured such that the retracting of the clamping component from the wedged interlock is limited to a predetermined retraction distance to prevent disassembly of the clamping component from the mounting component.

In another example, the snap fit is further configured such that the retracting of the clamping component from the wedged interlock is limited to a predetermined retraction distance to enable opening of the at least one parallel jaw clamp while preventing disassembly of the clamping component from the mounting component. This example may be particularly beneficial because it enables the opening of the at least one parallel jaw clamp while preventing their complete disassembly. This may make it much easier to assemble and disassemble the oral cleaning device.

In another example, the first fastening interface of the mounting component comprises one or more extrusions configured for interlocking with the drive train. For example, the one or more extrusions may extend into matching holes or depressions in the drive train. This example may be beneficial because it may provide for very high rotational stability of the mounted drive train.

In another example, the second fastening interface comprises a clip element configured for bracing the drive train against the one or more extrusions. The clip element may for example may interlock with an extension or tab protruding from the drive train. This may help to further stabilize the rotational stability drive train.

The second fastening interface may for example comprise a notch or opening for receiving the extension or tab of the drive train. In this example the notch or opening may be elongated to enable the clamping component to be moved away from the mounting component which would cause the at least one parallel jaw clamp to open.

In another example, the clamping component comprises a spring cup configured for receiving a compression spring. This may be beneficial because the clamping component can then receive a predetermined or constant compression from a spring, which can be used to provide a constant force on the mechanical interlock which is then transferred to the at least one parallel jaw clamp. The use of the spring means that the at least one parallel jaw clamp will exert a force or pressure that is maintained constantly or in a predetermined fashion. The spring also absorbs any tolerances and may also absorb impacts if the oral cleaning device is dropped.

In another aspect, an oral cleaning device is disclosed. The oral cleaning device comprises an example of the drive train mount as disclosed above. The oral cleaning device further comprises the body portion. The body portion comprises the at least one interior structural element. The oral cleaning device further comprises the drive train. The drive train mount rigidly mounts the drive train to the body portion. This example may be beneficial because it provides for an oral cleaning device which has its drive train mounted rigidly yet removably to the body portion. This may provide for extended service life of the oral cleaning device as well as provide for enhanced ability to provide maintenance or service to the oral cleaning device, as was previously discussed above.

In another example, the oral cleaning device is any one of the following: an electric toothbrush, a rotary motion electric toothbrush, an oscillating motion electric toothbrush, a sonic toothbrush and an ultrasonic toothbrush. These examples may be beneficial because they all comprise drive trains which may be mounted to a body portion. Oral cleaning devices incorporating the above-described drive train may therefore have the various benefits that were attributed to the use of the drive train above.

In another example, the drive train is an electric motor or a mechanical resonator. In both cases, the electric motor or mechanical resonator may produce vibrations, which may cause a wear and tear on the internal components of the oral cleaning device. The use of the drive train mount may provide for enhanced service as well as a longer serviceable life for the oral cleaning device.

In another example, the body portion comprises a plastic tube. The at least one interior structural element is formed from two parallel rails extending along an interior surface of the plastic tube. The at least one parallel jaw clamp is a parallel jaw clamp for each of the two parallel rails. This example may be particularly beneficial because the two rails provide for an efficient means of packing the components into the oral cleaning device. The use of the parallel jaw clamps to grip the two parallel rails provides the benefit of not relying on precise mechanical tolerances during manufacture of the drive train mount as well as providing for a drive train mount that can adjust to the current state of the two parallel rails. For example, over a period of thousands of hours of use, the two parallel rails may for example become worn or compressed. As this occurs, the parallel jaw clamps may be continually pressed together and adjust to the various conditions of the two parallel rails. Also, if the two parallel rails are damaged, the use of the drive train mount still enables the oral cleaning device to be disassembled, repaired and then reassembled.

In another example, the oral cleaning device further comprises a bottom cap for sealing a back end of the plastic tube and an electronics portion mounted between the bottom cap and the drive train mount. The electronics portion may be a battery or it may comprise a battery.

In some examples, there may be a front coupler configured for attaching a front portion of the drive train to the plastic tube. For example, the front coupler may be configured for sealing the front end of the plastic tube against liquids or other materials such as toothpaste.

In another example, the oral cleaning device further comprises the compression spring configured for exerting a force between the electronics portion and the drive train mount. For example, the compression spring may seat in the spring cup of the drive train mount. The compression spring is configured for actuating the wedged mechanical interlock to cause the parallel jaw clamp for each of the two parallel rails to grip the two parallel rails. The use of the compression spring provides an automatic means of adjusting the force exerted by the parallel jaw clamps on the parallel rails.

In another aspect, there is a method of replacing a battery of the oral cleaning device. The device preferably or optionally comprises a front coupler that is configured for attaching to a front portion of the drive train to the plastic tube. The front coupler may be configured for sealing a front end of the plastic tube. The method comprises removing the bottom cap from the body portion. The method further comprises at least partially removing the electronics portion from the body portion. The method further comprises at least partially removing the compression spring from the body portion. The method further comprises releasing the parallel jaw clamp for each of the two parallel rails by moving the clamping component away from the mounting component. The method further comprises at least partially removing the drive train mount from the body portion. The method further comprises at least partially removing the drive train from the body portion. The method further comprises preferably removing the front coupler from the body portion. The above steps of removing various components of the oral cleaning device may be, in some examples, performed individually. In other examples, several of these steps may be performed together. In yet further examples, all of these steps may be performed at the same time. In this example, there are these two parallel rails within the interior of the plastic tube. The oral cleaning device may be designed such that all these components are removed together and are split out along the two rails simultaneously. The components may be designed such that to remove the battery they are only partially removed or slid out of the body portion.

The method then comprises replacing the battery. Replacing the battery may include removing the battery from the electronics portion and then reassembling it or it may also include, in some examples, replacing the complete electronics portion or assembly. After the battery has been replaced, the method further comprises preferably inserting the front coupler into the body portion. Then the method further comprises inserting the drive train into the body portion. The method further comprises inserting the drive train mount into the body portion. The method further comprises inserting the compression spring into the body portion. The method further comprises inserting the electronics portion into the body portion. The method further comprises reattaching the bottom cap to the body portion and compressing the compression spring. The various components of the oral cleaning device which are inserted may be inserted individually. In other examples, several components are inserted together at the same time. In yet further examples, all of the components are slid and inserted into the plastic tube simultaneously. For example, the components are at least partially assembled outside and then slid into the plastic tube.

Compressing the compression spring causes motion of the clamping component towards the mounting component to actuate the parallel jaw clamp for each of the two parallel rails to grip the two parallel rails.

This method of replacing the battery may be beneficial because the two parallel rails may become worn or damaged through extensive use of the oral cleaning device. Because the drive train mount has the two parallel jaw clamps, which are essentially forced together by the compression spring, this means that the oral cleaning device can be assembled and disassembled and proper mounting of the drive train is not dependent upon close tolerances for the parts which interact with the two parallel rails.

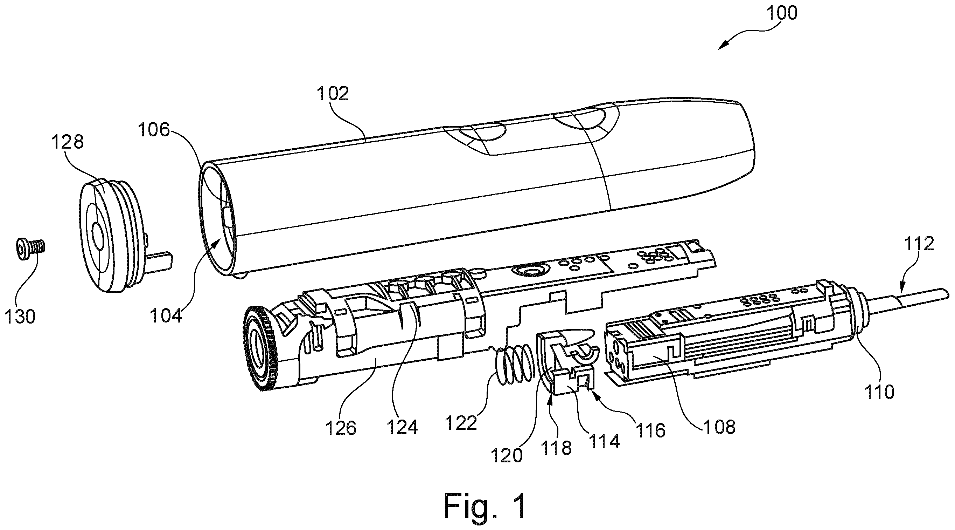

Fig. 1 shows an exploded view of an oral cleaning device 100. There is a body portion 102 that in this example is a plastic tube that has an interior surface 104. Within the interior surface 104 there are two interior structural elements 106. The end of one of them is visible, the other is obscured. They are two parallel rails in this example.

The oral cleaning device 100 is shown as comprising a drive train 108. In this example, the drive train 108 is a mechanical resonator. The drive train 108 may optionally be connected to the oral cleaning device 100 at its front end using a front coupler 110. The drive train 108 is inserted through a bottom of the tube 102 so that a toothbrush mounting location 112 sticks out of the top end of the body portion 102. The front coupler 110 may not be present in all designs. In this example, the front coupler 110 provides for holding one end of the drive train 108 as well as sealing the body portion 102 at one end. When the drive train 108 is inserted into the body portion 102, the toothbrush mounting location 112 sticks out the end and a toothbrush may be mounted there or other attachment and used for oral hygiene.

A drive train mount 114 is attachable to one end of the drive train 108. Examples of the drive train mount 114 will be shown in more detail in following Figures. The drive train mount 114 comprises a mounting component 116 and a clamping component 118. The mounting component 116 is configured for mounting to the drive train 108 and the clamping component 118 is pressed against the mounting component 116 and causes a clamping effect on the interior structural elements 106 or rails in this case. The clamping component 118 has a spring cup 120 for receiving a compression spring 122. This is used to press the two portions of the drive train mount 114 together and clamp onto the interior structural elements 106.

For example, behind this, an electronics portion 124 is used and presses against the compression spring 122 also. The electronics portion 124 contains control and power electronics for powering and controlling the oral cleaning device 100. The battery 126 in some examples may be removable and may be able to be replaced. The components 124, 122, 114, 108, and 110 may be attached together and then slid collectively into the interior 104 of the body portion 102. After insertion, a bottom cap 128 may be used to compress the parts together and put compression on the compression spring 122. In this example, there is an optional fixing screw 130 that is used to hold the bottom cap 128 in place. This is however optional and different means may be used for attaching the bottom cap 128. For example, the bottom cap 128 may be plastic welded to the body portion 102. Other options would be that the bottom cap 128 itself screws on or is held by retaining clips.

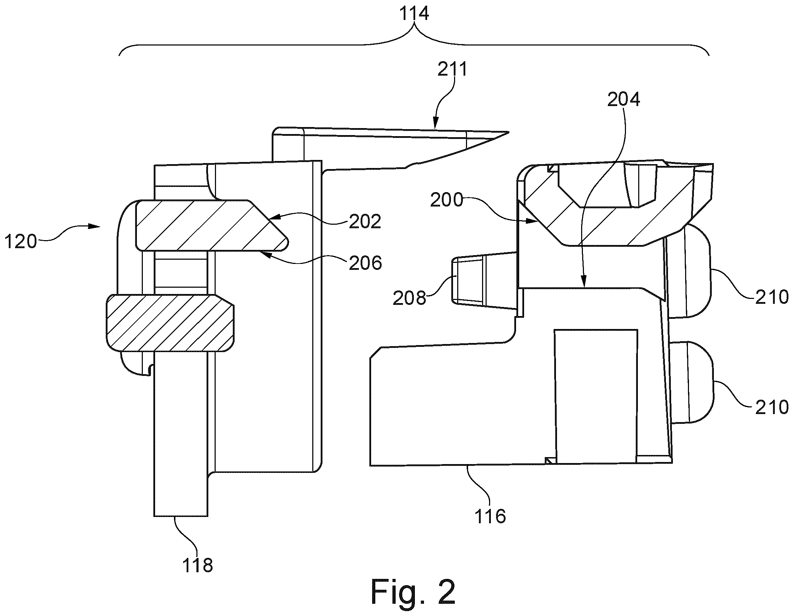

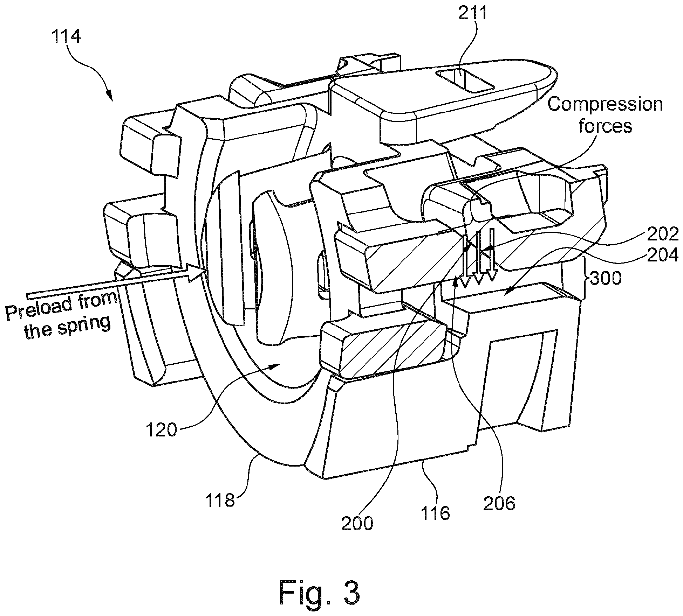

Fig. 2 shows an exemplary exploded side view of the drive train mount 114 formed from the clamping component 118 and the mounting component 116. The mounting component 116 has a first preferably conical wedge surface 200 that mates with a second preferably conical wedge surface 202 that is located on the clamping component 118. The mounting component 116 has a first gripping element 204 and the clamping component 118 has a second gripping element 206. When the first wedge surface 200 and the second wedge surface 202 are pressed together, force is transferred such that the first gripping element 204 and the second gripping element 206 form a parallel jaw clamp. Further details are shown below in Fig. 3.

On the mounting component 116 there are a number of extrusions which form a portion of the first fastening element 210. These extrusions 210 may go into holes or cavities in the drive train 108 and serve to secure it in position. The clamping component 118 comprises a second fastening element 211. In this example there is a opening 211 in an overlap which may extend over and receive an extension or tab the drive train 108. The clip or latch formed by the second fastening element 211 may also help when disassembling the oral cleaning device 100. It may be used to pull the drive train 108 out when the drive train mount 114 is removed.

Also visible in Fig. 2 is an optional spring clip element 208 for forming a snap fit between the mounting component 116 and the clamping component 118. As will be illustrated in further drawings, the snap fit formed by the spring clip element 208 holds the mounting component 116 and the clamping component 118 together to prevent disassembly but allows some play so that the forces between the first conical wedge surface 200 and the second conical wedge surface 202 may be released.

Fig. 3 shows an assembly drawing of the drive train mount 114. The clamping component 118 has been inserted into the mounting component 116. There are compression forces formed by the first wedge surface 200 and the second wedge surface 202. When the force from the spring is exerted on the spring cup 120, the first gripping element 204 and the second gripping element 206 move towards each other forming a parallel jaw clamp 300.

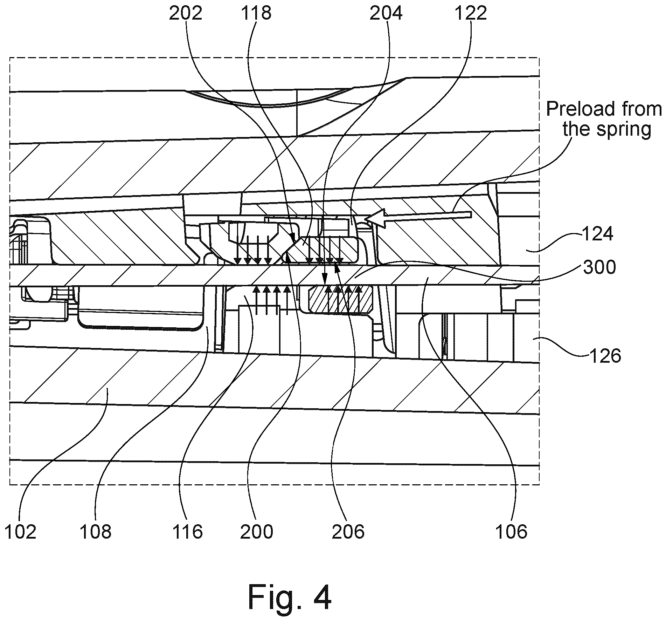

Fig. 4 shows the components assembled into the oral cleaning device 100. There is a cross-sectional view which cuts away part of the wall of the body portion 102 to reveal the interior structure element 106 or rail being compressed by the parallel jaw clamp 300. The compression spring 122 exerts force between the electronics portion 124 and the spring cup 120 of the clamping component 118. This Figure illustrates how the components can be assembled and slid into the interior 104 of the oral cleaning device 100 and be held in place by the drive train mount 114.

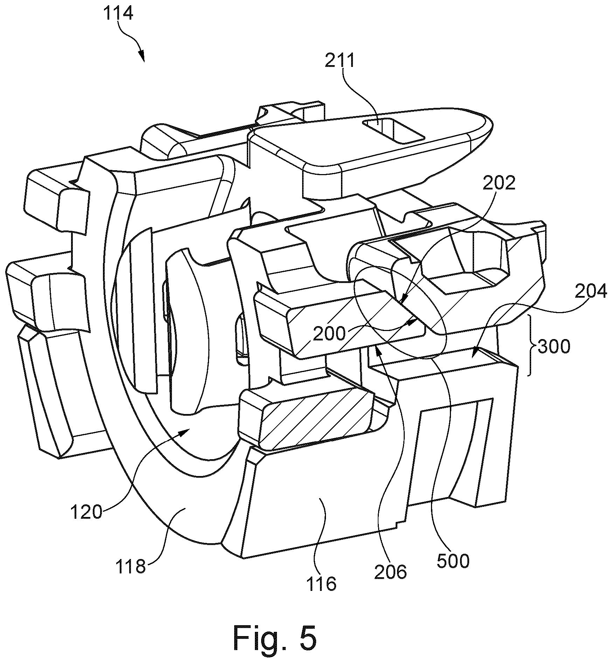

Fig. 5 shows a further side view of the assembled drive train mount 114. This Figure illustrates how the two wedge surfaces 200, 202 form a wedged mechanical interlock 500. Again, when driven together, this causes the first gripping element 204 and the second gripping element 206 to perform a wedged mechanical interlock 500 that can be closed or expanded depending upon force applied to the first wedge surface 200 and the second wedge surface 202.

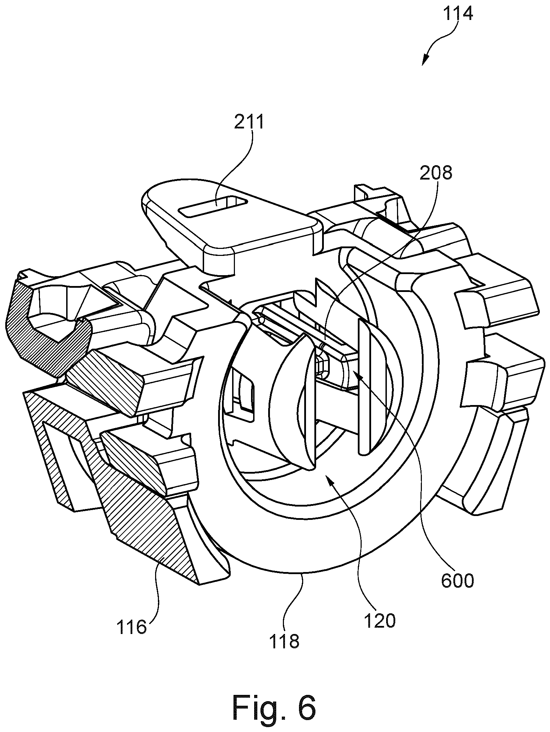

Fig. 6 shows a rear view of the assembled drive train mount 114. The spring clip element 208 is visible within an optional extension of the spring cup 120. This forms a snap fit 600 with play in it. The snap fit 600 prevents the clamping component 118 and the mounting component 116 from being removed or disassembled completely. However, the snap fit 600, as visible in this Figure, can be moved and opened a bit to release the parallel jaw clamps 300.

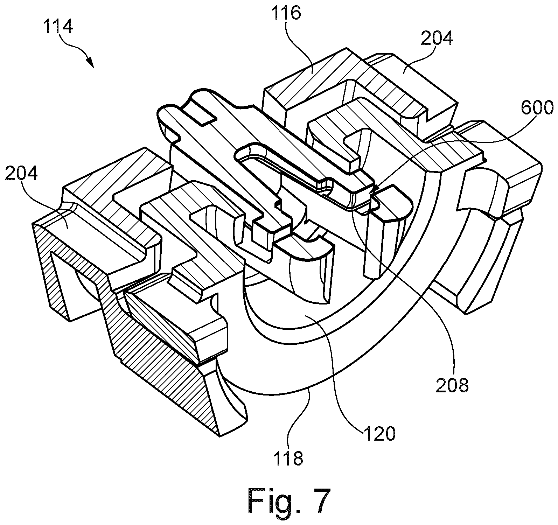

Fig. 7 shows a horizontal cross-sectional view of the drive train mount 114. The spring clip element 208 is visible and is forming the snap fit 600. In this example, the clamping component 118 has been retracted and is in contact with one stop of the spring clip element 208. In the position shown in Fig. 7, the parallel jaw clamp 300 would be retracted. To close the parallel jaw clamp 300, the clamping component 118 can be driven towards the mounting component 116. In this cross-sectional view it can be seen that the spring clip element 208 prevents the clamping component 118 from being moved too far in either direction towards or away from the mounting component 116.

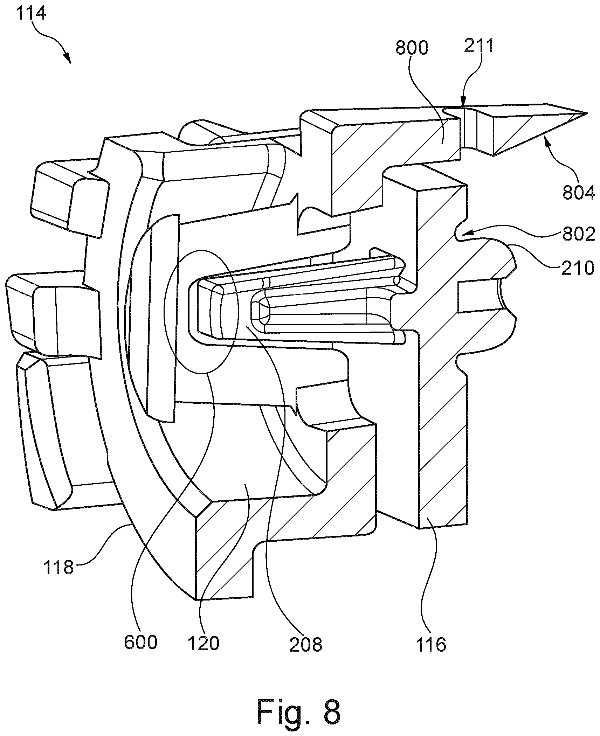

Fig. 8 shows a vertical cross-sectional view of the drive train mount 114. This shows a further view of one of the spring clip elements 208 used to form the snap fit 600. This Figure also illustrates the first fastening element 800 formed by extrusions 210 on the mounting component 116 and the clip element 210' on the clamping component 118. It can further be seen that there is a recessed region 802 surrounding the extrusion 210. This recessed region 802 helps to seat and make the connection between the drive train mount 114 and the drive train 104 more rigid. The second fastening element 211 is shown above and is connected to the clamping component 118. In this example the second fastening element 211 performs several tasks. The second fastening element 211 may be used to go above and wedge down on the drive train 108 to help hold it in place against the extrusions 210 and the recessed region 802. The second fastening element 211 also have an opening which may receive a tab or extension of the drive train 108 to form a latch.

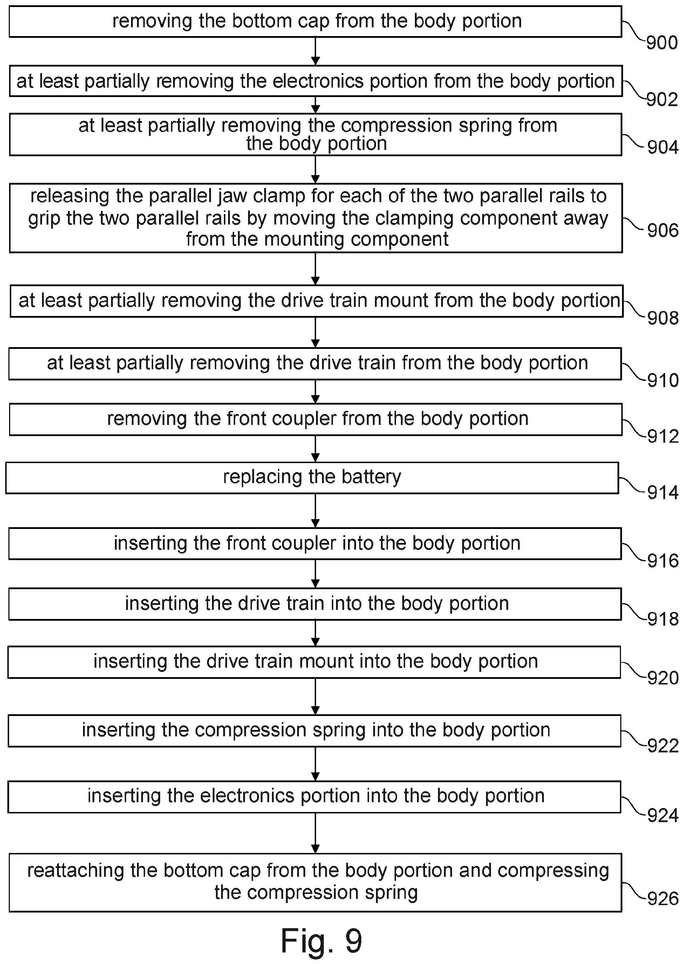

Fig. 9 shows a method of changing the battery 126 of the oral cleaning device 100. In step 900, the bottom cap 128 is removed from the body portion 102. In step 902, the electronics portion 124 is removed from the body portion 102. In step 904, the compression spring 122 is removed from the body portion 102. In step 906, the parallel jaw clamps 300 grabbing each of the rails 106 is removed by moving the clamping component 118 away from the mounting component 116. In step 908, the drive train mount 114 is removed from the body portion 102. In step 910, the drive train 108 is removed from the body portion 102. In step 912, the front coupler 110 is removed from the body portion 102 if it is present. In some examples, the front coupler is not removed from the body portion 102 and remains fixed there. Step 912 is therefore optional in some examples.

Steps 900-912 were listed as individual steps. However, these steps may in some examples be performed simultaneously or in sub-groups. Looking at the assembly drawing in Fig. 1 it can be seen that the entire assembly is designed to slide in or slide out of the interior 104 of the body portion 102 or tube. In many examples steps 900-912 would be performed simultaneously.

In step 914, the battery 126 is replaced. In step 916, the front coupler 110 is optionally inserted into the body portion 102. In step 918, the drive train 108 is inserted into the body portion 102. In step 920, the drive train mount 114 is inserted into the body portion 102. This step may also comprise attaching the drive train mount 114 to the rear or back end of the drive train 108. In step 922, the compression spring 122 is inserted into the body portion 102. In step 924, the electronics portion 124 is inserted into the body portion 102.

As with the disassembly, in the assembly these steps 916-924 may be performed at the same time or in sub-groups. In step 926, the bottom cap 128 is reattached to the body portion 102. Attaching the bottom cap 128 may have the effect of pushing the entire assembly into the interior 104 of the body portion 102 thereby compressing the compression spring 122 and causing the parallel jaw clamps 300 to close down on the two parallel rails 106.

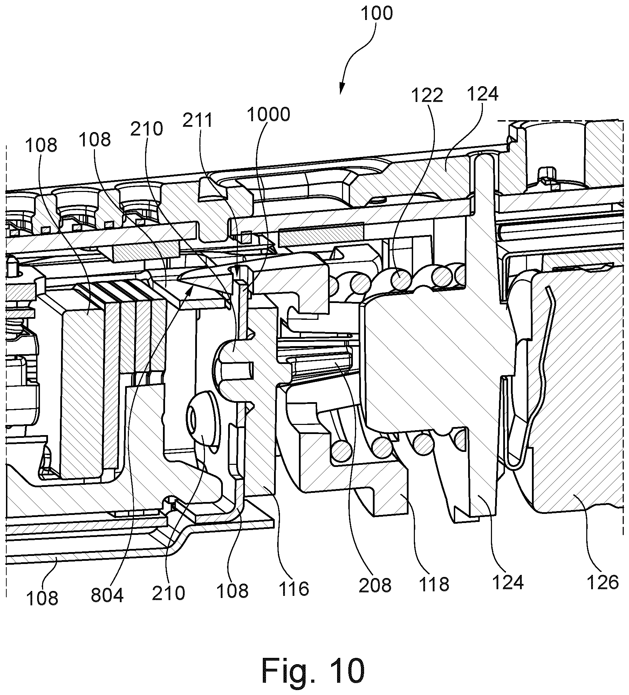

Fig. 10 shows a cross-sectional view of the oral cleaning device 100. The cross-sectional view shows the drive train mount 114 (the mounting component 116 and the clamping component 118), the drive train 108, and the electronics portion 124. The electronics portion 124 is also shown. The electronics portion 124 is shown as using the spring 122 to compress the entire assembly. The electronics portion 124 also overhangs the drive train 108 and the drive train mount 114. The various components of the oral cleaning device 100 are shown as being interlocked, so that when inserted or removed from the body portion 102, they remain at least partially assembled.

The first fastening element, 210, of the mounting component 116 comprises extensions that are shown as extending through a wall of the drive train 108. The second fastening element, 211, is an opening that allows a nib or tab 1000 from the drive train 108 to provide a latch. Additionally, when the drive train mount 114 is installed, the wedged region 804 also presses against the drive train 108 and further locks it into position.

It is understood that one or more of the aforementioned embodiments of the invention may be combined as long as the combined embodiments are not mutually exclusive.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### LIST OF REFERENCE NUMERALS

- 100: oral cleaning device
- 102: body portion (tube)
- 104: interior
- 106: interior structural element (rail)
- 108: drive train
- 110: front coupler
- 112: toothbrush mounting location
- 114: drive train mount
- 116: mounting component
- 118: clamping component
- 120: spring cup
- 122: compression spring
- 124: electronics portion
- 126: battery
- 128: bottom cap
- 130: fixing screw
- 200: first conical wedge surface
- 202: second conical wedge surface
- 204: first gripping element
- 206: second gripping element
- 208: spring clip element
- 210: first fastening element
- 211: second fastening element
- 300: parallel jaw clamp
- 500: wedged mechanical interlock
- 600: snap fit
- 800: first fastening element
- 802: recessed region
- 804: wedged region
- 900: removing the bottom cap from the body portion
- 902: at least partially removing the electronics portion from the body portion
- 904: at least partially removing the compression spring from the body portion
- 906: releasing the parallel jaw clamp for each of the two parallel rails to grip the two parallel rails by moving the clamping component away from the mounting component
- 908: at least partially removing the drive train mount from the body portion
- 910: at least partially removing the drive train from the body portion
- 912: removing the front coupler from the body portion
- 914: replacing the battery
- 916: inserting the front coupler into the body portion
- 918: inserting the drive train into the body portion
- 920: inserting the drive train mount into the body portion
- 922: inserting the compression spring into the body portion
- 924: inserting the electronics portion into the body portion
- 926: reattaching the bottom cap from the body portion and compressing the compression spring
- 1000: tab

## Claims

1. A drive train mount (114) for an oral cleaning device (100), wherein the drive train mount comprises:
- a mounting component (116) comprising a first fastening interface (210) configured for receiving a drive train (108) of the oral cleaning device and comprising at least one first gripping element (204); and
- a clamping component (118) comprising at least one second gripping element (206) paired with the at least one first gripping element, wherein the clamping component further comprises a second fastening interface (211) configured for receiving the drive train, wherein the clamping component and the mounting component are configured to form a wedged mechanical interlock (500), wherein the drive train mount is configured such that actuation of the wedged interlock causes the paired at least one first gripping element and the at least one second gripping element to form at least one parallel jaw clamp (300) configured to grip at least one interior structural element (106) of the oral cleaning device.

2. The drive train mount of claim 1, wherein the drive train mount is configured to rigidly mount the portion of the drive train to the oral cleaning device using the first fastening interface, the second fastening interface, and the at least one parallel jaw clamp.

3. The drive train mount of claim 1 or 2, wherein the wedged interlock is formed from a pair of mating conical wedges (200, 202).

4. The drive train mount of claim 1, 2, or 3, wherein the drive train mount is further configured to form a snap fit (600) between the mounting component and the clamping component.

5. The drive train mount of claim 4, wherein the snap fit is configured to enable opening of the parallel jaw clamp by retracting the clamping component from the wedged interlock.

6. The drive train mount of claim 5, wherein the snap fit is further configured such that retracting of the clamping component from the wedged interlock is limited to a predetermined retraction distance to prevent disassembly of the clamping component from the mounting component.

7. The drive train mount of any one of the previous claims, wherein the clamping component comprises a spring cup (120) configured for receiving a compression spring.

8. The drive train mount of any one of the previous claims, wherein any one of the following:
- wherein the first fastening interface comprises one or more extrusions (210) configured for interlocking with the drive train, and wherein the clamping component;
- wherein the second fastening interface comprises a clip element (211) configured for fastening the drive train; and
- combinations thereof.

9. An oral cleaning device (100) comprising:
- the drive train mount (114) of any one of claims 1 through 8;
- the body portion (102), wherein the body portion comprises the at least one interior structural element (106); and
- the drive train (108), wherein the drive train mount rigidly mounts the drive train to the body portion.

10. The oral cleaning device of claim 9, wherein the oral cleaning device is any one of the following: an electric toothbrush, a rotary motion electric toothbrush, an oscillating motion electric toothbrush, a sonic toothbrush, and an ultrasonic toothbrush.

11. The oral cleaning device of claim 9 or 10, wherein the drive train is any one of the following: an electric motor and a mechanical resonator (108).

12. The oral cleaning device of claim 9, 10, or 11, wherein the body portion comprises a plastic tube, wherein the at least one interior structural element is formed from two parallel rails extending along an interior surface of the plastic tube, and wherein the at least one parallel jaw clamp is a parallel jaw clamp for each of the two parallel rails.

13. The oral cleaning device of claim 12, wherein the oral cleaning device further comprises:
- a bottom cap (128) for sealing a back end of the plastic tube; and
- an electronics portion (124) mounted between the bottom cap and the drive train mount.

14. The oral cleaning device of claim 13, wherein the oral cleaning device further comprises the compression spring configured for exerting force between the electronics portion and the drive train mount, wherein the compression spring is configured for actuating the wedged mechanical interlock to cause the parallel jaw clamp for each of the two parallel rails to grip the two parallel rails.

15. A method of replacing a battery (126) of an oral cleaning device (100) according to claim 13 or 14, wherein the electronics portion (124) comprises the battery (126), wherein the device preferably comprises a front coupler (110) configured for attaching a front portion of the drive train to the plastic tube, wherein the front coupler is configured for sealing a front end of the plastic tube, wherein the method comprises:
- removing (900) the bottom cap (128) from the body portion (102);
- at least partially removing (902) the electronics portion from the body portion;
- at least partially removing (904) the compression spring (122) from the body portion;
- releasing (906) the parallel jaw clamp (300) for each of the two parallel rails (106) to grip the two parallel rails by moving the clamping component away from the mounting component;
- at least partially removing (908) the drive train mount (114) from the body portion;
- at least partially removing (910) the drive train (108) from the body portion;
- preferably (912) removing the front coupler from the body portion;
- replacing (914) the battery;
- preferably (916) inserting the front coupler into the body portion;
- inserting (918) the drive train into the body portion;
- inserting (920) the drive train mount into the body portion;
- inserting (922) the compression spring into the body portion;
- inserting (922) the electronics portion into the body portion;
- reattaching (924) the bottom cap from the body portion and compressing the compression spring, wherein compressing the compression spring causes motion of the clamping component towards the mounting component to actuate the parallel jaw clamp for each of the two parallel rails to grip the two parallel rails.
